# EUROPÄISCHE PATENTSCHRIFT

(11) **EP 0 946 378 B1**
(45) Veröffentlichungstag und Bekanntmachung des Hinweises auf die Patenterteilung: **03.03.2004**
(21) Anmeldenummer: 97953872.5
(22) Anmeldetag: 19.12.1997
(51) Int. Cl.: B60R 21/26

(54) **HYBRID-GASGENERATOR**
HYBRID GAS GENERATOR
GENERATEUR DE GAZ HYBRIDE

(30) Priorität: 24.12.1996 DE 19654315
(43) Veröffentlichungstag der Anmeldung: 06.10.1999
(73) Patentinhaber: Dynamit Nobel AIS GmbH Automotive Ignition Systems, 90765 Fürth (DE)
(72) Erfinder: ANACKER, Lothar, D-91233 Kersbach (DE); BAYER, Karl, D-92348 Berg (DE); BERENZ, Eduard, D-90768 Fürth (DE); BREDE, Uwe, D-90765 Fürth (DE); BRETFELD, Anton, D-90765 Fürth (DE); KRAFT, Josef, D-92348 Berg (DE); SCHEIDERER, Gerrit, D-90765 Fürth (DE); WEUTER, Waldemar, D-90765 Fürth (DE); ZHANG, Jiang, D-90419 Nürnberg (DE)
(74) Vertreter: Scherzberg, Andreas, Dr.
(86) Internationale Anmeldenummer: PCT/EP1997/007164
(87) Internationale Veröffentlichungsnummer: WO 1998/028168

(56) Entgegenhaltungen:
- FR-A- 2 227 153
- US-A- 3 758 131
- US-A- 3 773 353

## Beschreibung

Die Erfindung betrifft einen Hybrid-Gasgenerator nach dem Oberbegriff des Anspruchs 1.

Aus EP 0 616 578 B1 ist ein Hybrid-Gasgenerator für Airbags bekannt, der in einer Brennkammer eine anzündbare Feststoffladung und in einer Speicherkammer ein unter Druck stehendes Gas enthält. Beim Auslösen des Gasgenerators zündet ein Anzündelement die Feststoffladung. Durch die entstehenden Brenngase wird ein hohler Kolben angetrieben, der ein die Speicherkammer verschließendes Schließelement durchstößt, wodurch das in der Speicherkammer enthaltene unter Druck stehende Gas zum Auslaß ausströmen kann. Ferner strömen die von der Feststoffladung erzeugten Brenngase in die Speicherkammer ein, wo sie sich mit dem Druckgas vermischen. Beim Zerstören des Schließelementes strömt zunächst kaltes Druckgas zum Auslaß. Dadurch wird verhindert, daß die heißen Brenngase zuerst in den Airbag gelangen. Anschließend strömt ein Gemisch aus Kaltgas und Brenngas in den Airbag ein.

Ferner ist aus EP 0 669 231 A2 ein Hybrid-Gasgenerator bekannt, bei dem zwischen einer die Feststoffladung enthaltenden Brennkammer und einer ein Druckgas enthaltenden Speicherkammer eine Mischkammer angeordnet ist. Die Brennkammer und die Speicherkammer sind durch Dichtscheiben abgedichtet, welche durch die Brenngase der Feststoffladung zerstört werden. Hierbei dringen das Brenngas und das Kaltgas aus entgegengesetzten Richtungen in die Mischkammer ein, wodurch das Ausströmen behindert wird. Ferner tritt zuerst das schadstoffbeladene heiße Brenngas aus, weil die Dichtscheibe der Brennkammer als erste zerstört wird.

Die bekannten Hybrid-Gasgeneratoren haben ein von der Konstruktion her bestimmtes Druckaufbauverhalten, wobei der maximale Druck und der Druckanstiegsgradient vorgegeben sind. Dabei wird der an den Gasgenerator angeschlossene Airbag sehr schnell und in einem Zuge aufgeblasen. Dabei können die Passagiere durch den Airbag verletzt werden, wenn sie sich "Out of Position" befinden.

Die gattungsbildende US-A-3,773,353 zeigt einen Hybrid-Gasgenerator mit einer in einer ersten Brennkammer angeordneten ersten Feststoffladung, eine ein Druckgas enthaltende Speicherkammer, die mit einem Schließelement verschlossen ist und ein unter dem Druck der Brenngase das Schließelement aufstoßendes Stoßelement und eine zweite Brennkammer mit einer anzündbaren zweiten Feststoffladung.

US-A-3,758,131 oder FR-A-2,227,153 offenbaren eine zweite zeitverzögert anzündbare Feststoffladung bei einem Hybrid-Gasgenerator.

Der Erfindung liegt die Aufgabe zugrunde, einen Hybrid-Gasgenerator zu schaffen, der es ermöglicht, den zeitlichen Ablauf des Druckaufbaus zu steuern, um eine höhere Sicherheit für die Passagiere zu bewirken.

Die Lösung dieser Aufgabe erfolgt erfindungsgemäß mit den im Patentanspruch 1 angegebenen Merkmalen.

Bei dem erfindungsgemäßen Gasgenerator sind zwei Feststoffladungen in unterschiedlichen Brennkammern vorgesehen, wobei die zweite Feststoffladung zeitverzögert gegenüber der ersten Feststoffladung anzündbar ist. Dadurch erfolgt die Gaserzeugung mit zwei unterschiedlichen Druckanstiegsgradienten, wobei vorzugsweise zunächst ein flacherer Druckanstieg und dann ein steilerer Druckanstieg realisiert wird. Der Zeitpunkt des steileren Druckanstiegs kann durch die Anzündverzögerung sehr genau bestimmt werden. Die beiden Feststoffladungen können auch unterschiedliche Größen haben bzw. unterschiedliche Gasmengen bereitstellen. Die prozentuale Druckverteilung der gesamten Ladung auf die beiden Einzelladungen ermöglicht eine gezielte Beeinflussung des Druckverlaufs. Im Rahmen der Erfindung ist es auch möglich, zusätzlich zu den beiden Feststoffladungen noch mindestens eine weitere Feststoffladung vorzusehen.

Der erfindungsgemäße Hybrid-Gasgenerator ermöglicht die Realisierung verschiedenartiger Druckaufbaucharakteristiken, und zwar nicht nur durch die gezielte Verteilung der Ladungen und die Steuerung der Anzündvorgänge, sondern auch durch andere konstruktive Modifizierungen, wie beispielsweise die Bemessung des Querschnitts der Ausströmöffnungen.

Gemäß einer bevorzugten Weiterbildung der Erfindung ist vorgesehen, daß die erste Feststoffladung und das Schließelement an entgegengesetzten Enden der Speicherkammer angeordnet sind und das Stoßelement sich durch die Speicherkammer erstreckt. Hierbei kann die Länge des Stoßelementes variiert werden, um unterschiedliche Druckaufbaucharakteristiken zu realisieren. Ein weiterer Parameter ist die Verweildauer der Brenngase in der Speicherkammer vor dem Öffnen des Schließelements. Dadurch kann der Wärmeübergang zwischen Brenngas und Speichergas beeinflußt werden, was sich auf den maximalen Druck und den Druckanstiegsgradienten auswirkt.

Weitere Vorteile und Merkmale der Erfindung ergeben sich aus der nachfolgenden Beschreibung eines Ausführungsbeispiels.

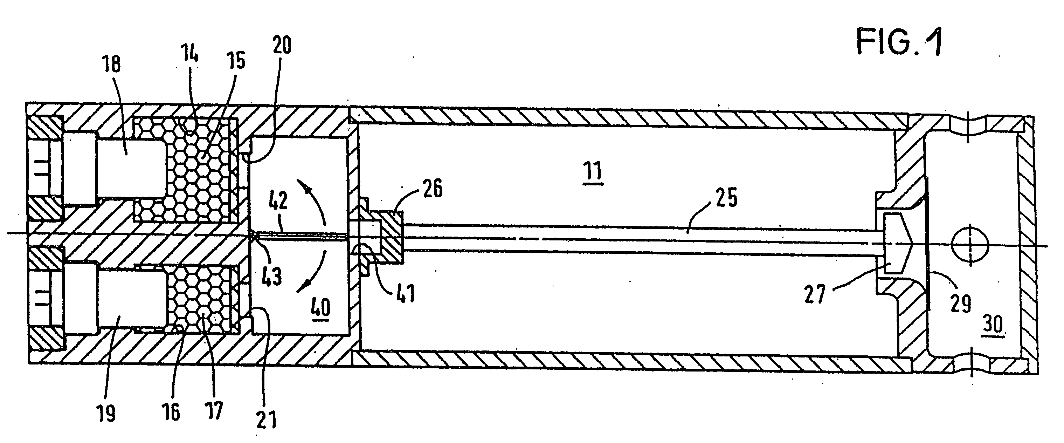

- Fig. 1: zeigt eine erfindungsgemäße Ausführungsform des Gasgenerators im Bereitschaftszustand.

Bei dem Ausführungsbeispiel von Fig. 1 ist jeder der beiden Feststoffladungen 15,17 ein eigenes Anzündelement 18,19 zugeordnet. Die Ausströmöffnungen 20,21 führen in eine Sammelkammer 40 hinein, die über eine Ausströmöffnung 41 mit der Speicherkammer 11 in Verbindung steht. Die Ausströmöffnung 41 wird von der Kappe 26 bedeckt, die mit dem Stoßelement 25 verbunden ist. Infolge der Sammelkammer 40 ist es möglich, unter Verwendung eines einzigen Stoßelements 25 wahlweise jede der beiden Feststoffladungen 15,17 als erste zu zünden. Da die Feststoffladungen unterschiedliche Größe und/oder unterschiedliche Beschaffenheit haben, kann die Druckerzeugungscharakteristik durch geeignete Ansteuerung der Anzündelemente 19,20 gewählt werden.

Die Sammelkammer 40 enthält ein Ventil 42 in Form einer um eine Achse 43 schwenkbaren Klappe. Wenn die Feststoffladung 15 zuerst angezündet wird, klappt das Ventil 42 vor die Ausströmöffnung 21 der anderen Feststoffladung 17, um zu verhindern, daß diese Feststoffladung 17 von der Sammelkammer 40 angezündet wird. Wenn andererseits zuerst die Feststoffladung 17 angezündet wird, klappt das Ventil 42 vor die Ausströmöffnung 20 der anderen Feststoffladung 15.

## Patentansprüche

1. Hybrid-Gasgenerator mit einer in einer ersten Brennkammer (14) angeordneten ersten Feststoffladung (15), einer ein Druckgas enthaltenden Speicherkammer (11), die mit einem Schließelement (29) verschlossen ist, und einem unter dem Druck der Brenngase das Schließelement (29) aufstoßenden Stoßelement (25), und eine zweite Brennkammer (16) mit einer anzündbaren zweiten Feststoffladung (17) vorgesehen ist, **dadurch gekennzeichnet, dass** die zweite Feststoffladung (17) zeitverzögert gegenüber der ersten Feststoffladung (15) anzündbar ist, und dass beide Brennkammern (14, 16) mit einer Sammelkammer (40) verbunden sind, die eine mit dem Stoßelement (25) verbundene Ausströmöffnung (41) aufweist, wobei jede der Feststoffladungen (15, 16) mit einem eigenen Anzündelement (18, 19) versehen ist und diejenige Feststoffladung, die als erste abbrennen soll, durch Ansteuerung des betreffenden Anzündelements (18, 19) wählbar ist.

2. Hybrid-Gasgenerator nach Anspruch 1, **dadurch gekennzeichnet, dass** ein Ventil (42) vorgesehen ist, das bei Abbrennen der ersten Feststoffladung (15) die zweite Feststoffladung (17) gegen Rückzünden abschirmt.

## Claims

1. Hybrid gas generator with a first solid charge (15) arranged in a first combustion chamber (14), a storage chamber (11) containing a compressed gas, which storage chamber (11) is sealed by a closure element (29), and a pushing element (25) pushing open the closure element (29) under the pressure of the combustion gases, and with a second combustion chamber (16) being provided that has an ignitable second solid charge (17), **characterised in that** the second solid charge (17) is ignitable in a time-delayed manner in relation to the first solid charge (15), and **in that** both combustion chambers (14, 16) are connected to a collecting chamber (40) which has an outflow opening (41) connected to the pushing element (25), with each of the solid charges (15, 16) being provided with its own ignition element (18, 19), and with it being possible to select that solid charge which is to burn away first by activating the relevant ignition element (18, 19).

2. Hybrid gas generator according to claim 1, **characterised in that** a valve (42) is provided that protects the second solid charge (17) against back-igniting when the first solid charge (15) burns away.

## Revendications

1. Générateur de gaz hybride comportant une première charge solide (15) disposée dans une première chambre de combustion (14), une chambre de stockage (11) contenant un gaz sous pression et fermée par un élément obturateur (29), et un élément percuteur (25) qui vient, sous l'action de la pression des gaz de combustion, briser l'élément obturateur (29), ainsi qu'une deuxième chambre de combustion (16) contenant une deuxième charge solide inflammable (17), **caractérisé en ce que** cette deuxième charge solide (17) peut être allumée avec un certain retard par rapport à la première charge solide (15), et **en ce que** les deux chambres de combustion (14, 16) sont reliées par une chambre collectrice (40) qui comporte un orifice d'échappement (41) associé à l'élément percuteur (25), chacune des charges solides (15, 16) étant munie de son propre élément allumeur (18, 19), et la charge qui doit brûler la première pouvant être choisie par commande de l'élément allumeur correspondant (18 ou 19).

2. Générateur de gaz hybride conforme à la revendication 1, **caractérisé en ce qu'**il comporte une soupape (42) qui, lors de la combustion de la première charge solide (15), protège la deuxième charge solide (17) de tout retour d'inflammation.
